# EUROPÄISCHE PATENTSCHRIFT

(11) **EP 1 528 019 B1**
(45) Veröffentlichungstag und Bekanntmachung des Hinweises auf die Patenterteilung: **21.06.2006**
(21) Anmeldenummer: 04023134.2
(22) Anmeldetag: 29.09.2004
(51) Int. Cl.: B65G 47/90

(54) **Handhabungseinrichtung**
Handling device
Dispositif de manutention

(30) Priorität: 15.10.2003 DE 10347933
(43) Veröffentlichungstag der Anmeldung: 04.05.2005
(73) Patentinhaber: Berger Lahr GmbH & Co. KG, 77933 Lahr (DE)
(72) Erfinder: Geiger, Martin, 77781 Biberach (DE)
(74) Vertreter: Maucher, Wolfgang

(56) Entgegenhaltungen:
- EP-A- 0 770 567
- US-A- 3 061 353
- US-A- 3 081 124

## Beschreibung

Die Erfindung bezieht sich auf eine Handhabungseinrichtung zum Handhaben insbesondere biegeschlaffer, länglicher Teile, mit einer Greifvorrichtung, die einen Greifer mit Greiferfingern zum Erfassen und Halten eines Teiles aufweist und mit einem Antrieb für eine Öffnungs- und Schließbewegung des Greifers.

Als Stand der Technik sind unterschiedliche Handhabungssysteme bekannt, um Teile ergreifen und umsetzen zu können. Dafür werden z.B. mechanische Greifer, Sauggreifer, Magnetgreifer und dergleichen verwendet.
Die zum Erfassen der Teile erforderlichen Greiferfinger, beziehungsweise Saugnäpfe müssen häufig teilespezifisch angefertigt und angepasste werden.
Beim mechanischen Greifen gibt es zwei grundsätzliche Möglichkeiten, ein Teil sicher zu greifen und auch während der Bewegung des Handhabungssystems lagerichtig zu halten, nämlich formschlüssiges Greifen und kraftschlüssiges Greifen.
Beim formschlüssigen Greifen sind die Greiferfinger der Kontur des Teils entsprechend geformt. Nach dem Schließen des Greifers umfassen die meist zweigeteilten Greiferfinger das Teil so, dass es bezüglich aller Freiheitsgrade in seiner Lage fixiert bleibt. Der Schließweg des Greifers wird meist konstruktiv über die Greiferbacken begrenzt. Die Greiferfinger sind daher oft aufwendig bearbeitet und auch nur für ein bestimmtes Teil geeignet. Für Variantenteile müssen die Finger gewechselt werden. Das Dokument US-A-3 081 124 offenbart eine solche Handhabungseinrichtung zum Handhaben von Zylindrischen Teile.
Beim kraftschlüssigen Greifen sind die Greiferfinger meist sehr einfach in Form von ebenen oder prismatischen Flächen ausgebildet. Nach dem Schließen des Greifers drücken die zweigeteilten Greiferfinger auf die Oberfläche des Teils und fixieren es in seiner Lage durch Anpresskraft. Die Kontur des Teils spielt hierbei keine große Rolle, weshalb auch Variantenteile gegriffen werden können. Der Schließweg des Greifers wird nicht mechanisch sondern nur durch das Teil selbst nach dem Einspannen begrenzt. Je nach Hub der Greiferbewegung kann die Dicke oder der Durchmesser des Teils somit variieren, ohne dass die Finger angepasst werden müssen.
Wenn Teile feste Formen und Konturen aufweisen ist ein sicheres Greifen in der Regel gegeben. Problematisch verhält es sich mit nicht konsistenten, biegeschlaffen Teilen wie zum Beispiel Gummileisten, Kabel oder dergleichen. Dazu sind spezielle, sehr aufwendige Greiferkonstruktionen notwendig, so dass anstatt einer automatisierten Handhabung meist eine manuelle Handhabung vorgesehen ist.
Beim gleichzeitigen Greifen von Teilen mit zum Beispiel pneumatisch betätigten, mechanischen Greifern können mehrere Greifer entsprechend der Anzahl der Teile verwendet werden, die dann für eine Öffnungs- und Schließbewegung über ein Ventil gemeinsam geschaltet werden. Dies ist jedoch kostenaufwendig und die Schließzeiten sind vergleichsweise lang. Die Stellungen der einzelnen Greifer müssen kontrolliert und dazu abgefragt werden, bevor das Handhabungssystem die Teile anheben kann.

Häufig werden Sauggreifer verwendet, um Teile mehrfach zu greifen. Bei biegeschlaffen, nachgiebigen Teilen ist diese Lösung häufig nicht anwendbar, weil das sichere Anliegen und Abdichten der Saugerlippen oft nicht sichergestellt ist. Außerdem ist beim Abgreifen vieler Teile eine erhebliche Saugleistung notwendig, um alle Saugleitungen zu evakuieren. Aus diesem Grund sind auch die Greifzeiten relativ lang. Fehlende Teile oder in Längsrichtung verschobene Teile beeinflussen den Greifvorgang und Verhindern den Aufbau eines Vakuums. Es sind zwar Lösungen mit Rückschlagventilen oder entsprechenden Drosselstellen in der Saugleitung bekannt, diese Lösungen sind aber für ein schnelles, zuverlässiges Greifen meist nicht zu gebrauchen und verteuern die Greifertechnik und vor allem den Betrieb.

Aufgabe der vorliegenden Erfindung ist es, eine Handhabungseinrichtung zum Handhaben insbesondere biegeschlaffer, länglicher Teile mit einer Greifvorrichtung zu schaffen, die mehrere biegeschlaffe Teile mit einer Bewegung gleichzeitig, schnell und sicher greifen und umsetzen kann. Dabei sollen die Teile selbst unterschiedlich lang und in Längsrichtung verschoben sein können.

Zur Lösung dieser Aufgabe wird vorgeschlagen, dass die Greifvorrichtung zum gleichzeitigen Erfassen mehrerer Teile ausgebildet ist und dazu wenigstens die zwei in Längserstreckungsrichtung der zu haltenden Teile etwa fluchtend angeordneter Greifer Mehrfach-Greiferfinger haben, die jeweils quer zur Längserstreckung der zu haltenden Teile wenigstens zwei durch Greiferfinger begrenzte Aufnahmefächer aufweisen und dass die Greiferfinger aller Greifer jeweils der gleichen Beaufschlagungsseite eine Greifer-Gruppe bilden, deren Greiferfinger miteinander verbunden sowie jeweils an den Antrieb angeschlossen sind für eine gemeinsame Öffnungs- und Schließbewegung.
Mit dieser Greifvorrichtung können mehrere biegeschlaffe, nachgiebige Teile gleichzeitig kraftschlüssig und sehr schnell ergriffen und gespannt werden, da alle jeweils zu einer Greifer-Gruppe gehörenden Greifer miteinander und mit dem Antrieb für eine gemeinsame Öffnungs- und Schließbewegung verbunden sind. Die Spannkraft ist auf Grund der Nachgiebigkeit der Teile in jedem Aufnahmefach annähernd gleich groß, so dass auch dadurch eine sichere Funktion auch bei größerer Anzahl von Aufnahmefächern und bei hohen Beschleunigungen des Handhabungssystems gegeben ist. Dabei können die Teile selbst unterschiedlich lang sein und in Längsrichtung verschoben bereitliegen.
Da alle Greifer synchron miteinander unabhängig von der Greifkraft schließen, hat es auf die Funktionssicherheit keinen Einfluss, ob alle oder nur ein Teil der Aufnahmefächer mit Teilen belegt sind. Die Greiferfunktion ist somit auch gewährleistet, wenn ein oder mehrere Teile an beliebigen Positionen fehlen.
Die Teile können beispielsweise aus einem gestreckt ausgelegten Vorrat von Teilen ergriffen werden.

Vorzugsweise haben die Mehrfach-Greiferfinger aufweisenden Greifer jeweils quer zur Längserstreckung der zu haltenden Teile verlaufende Bügel und daran auf einer Seite vorstehende, zueinander beabstandete Greiferfinger, wobei zwei einen Greifer bildende Mehrfach-Greiferfinger mit ihren Bügeln parallel nebeneinander angeordnet sind und abwechselnd direkt nebeneinander liegende Greiferfinger der beiden Mehrfach-Greiferfinger jeweils eine Begrenzungswand benachbarter Aufnahmefächer bilden.
Damit können eine Vielzahl von Teilen gleichzeitig aufgenommen werden. Die einzelnen Greiferfinger, zwischen denen Aufnahmefächer gebildet sind, führen durch ihre Verbindung mit den jeweiligen Bügeln, die Ihrerseits mit Antriebselementen für eine Öffnungs- und Schließbewegung verbunden sind, zwangsläufig eine gemeinsame Bewegung durch, so dass ein gleichzeitiges Halten der ergriffenen Teile sichergestellt ist.

Vorteilhafterweise weisen die einzelnen Greiferfinger benachbarter Mehrfach-Greiferfinger seitliche, in den Bereich des jeweils anderen Mehrfach-Greiferfingers eingreifende Fortsätze auf, wobei benachbarte, zu unterschiedlichen Mehrfach-Greiferfingern gehörende Einzel-Finger in Greifer-Offenstellung mit ihren den Greifseiten abgewandten Rückseiten etwa aneinander liegen.
Die ergriffenen Teile werden dadurch jeweils von einem zu einem Greifer gehörenden Greiferfinger-Paar an etwa deckungsgleich gegenüberliegenden Stellen beaufschlagt, so dass eine unerwünschte seitliche Auslenkung der drucknachgiebigen, biegeschlaffen Teile im Beaufschlagungsbereich vermieden wird.

Zweckmäßigerweise sind an den freien Enden der Greiferfinger, dem jeweiligen Aufnahmefach zugewandt, Abschrägungen zur Bildung einer konischen Aufnahmeöffnung der Aufnahmefächer vorgesehen. Die benachbarten und in der offenen Greifstellung vorzugsweise aneinanderliegenden Greiferfinger können dadurch beim Aufnehmen der Teile besser in die Zwischenräume der zur Aufnahme abgelegten Teile greifen, so dass ein störungsfreies Aufnehmen begünstigt ist.

Vorteilhafterweise sind mehr als zwei Greifer in Längsrichtung der Greifvorrichtung vorgesehen, insbesondere eine auf die Länge und/oder Eigenschaften der zu greifenden Teile abgestimmmte Anzahl von in Längsrichtung hintereinander angeordneten Greifern. Einerseits können dadurch die länglichen Teile über ihre Länge vorzugsweise in gleichmäßigen Abständen verteilt gehalten werden, so dass sie auch in Transportlage ihre gestreckte Lage beibehalten. Andererseits können sowohl lange als auch kurze Teile gegriffen werden. Auch die Lage der Teile in Längsrichtung ist unerheblich.
Der Längsabstand benachbarter Greifer sollte etwa der Hälfte der kürzesten Teilelänge entsprechen. Somit ist sichergestellt, dass unterschiedlich lange Teile, als auch Teile, die in Längsrichtung an unterschiedlichen Positionen liegen, sicher ergriffen werden. Unabhängig von der Lage und Anwesenheit der Teile ist somit ein sicheres Greifen und damit eine hohe Betriebssicherheit des Handhabungsvorganges sichergestellt.

Als Antrieb für die Greifer können zweckmäßigerweise ein oder mehrere handelsübliche Parallelgreifer vorgesehen sein, die jeweils mit einer ihrer Greiferbacken an der ersten Gruppe von Greiferfingern und mit der anderen Greiferbacke an der zweiten Gruppe von Greiferfingern angreifen.

Zur Belegungsüberwachung der einzelnen Aufnahmefächer für die zu greifenden Teile können Sensoren vorgesehen sein, wobei die Sensoren vorzugsweise etwa in einem zentralen Bereich der Längserstreckung der Greifvorrichtung angeordnet sind.
Durch die Lage im mittleren Bereich der Längserstreckung der Greifvorrichtung ist eine vergleichsweise hohe Erfassungssicherheit bei gleichzeitig geringem Aufwand vorhanden.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine perspektivische Seitenansicht einer Greifvorrichtung,
- Fig. 2: eine Unterseitenansicht der in Fig. 1 gezeigten Greifvorrichtung,
- Fig. 3: eine Stirnseitenansicht der in Fig. 1 und 2 gezeigten Greifvorrichtung,
- Fig. 4: eine Stirnseitenansicht der in Fig. 5 und 6 gezeigten Greifvorrichtung,
- Fig. 5: eine perspektivische Seitenansicht einer gegenüber Fig. 1 abgewandelten Ausführungsform einer Greifvorrichtung und
- Fig. 6: eine Unterseitenansicht der in Fig. 5 gezeigten Greifvorrichtung.

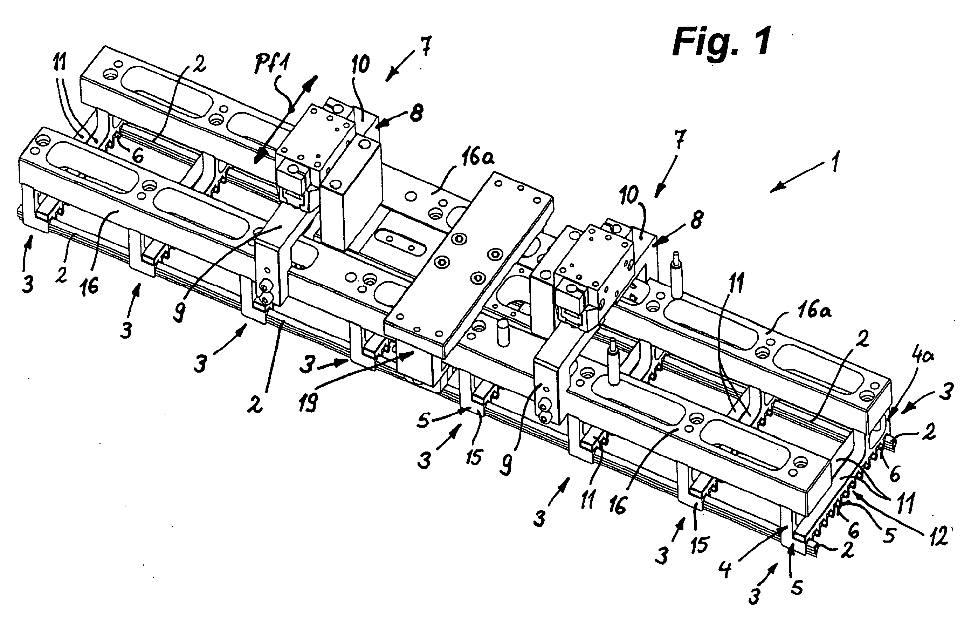

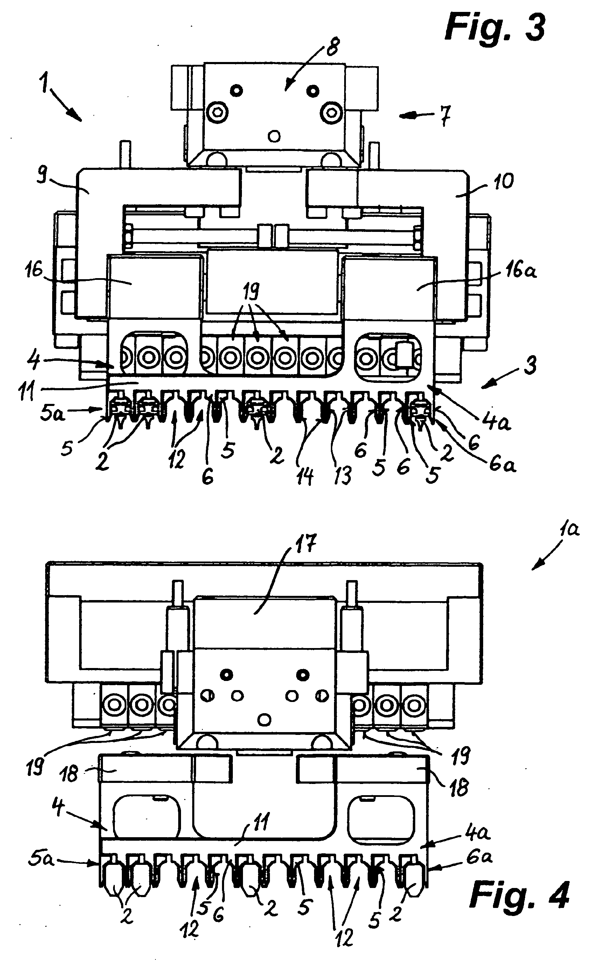

Von einer Handhabungseinrichtung ist in Fig. 1 eine Greifvorrichtung 1 zum Handhaben biegeschlaffer, länglicher Teile 2 dargestellt, wobei die Teile 2 Kabelstücke, Gummileisten oder ähnliche Teile sein können. Die Greifvorrichtung 1 ist zum gleichzeitigen Erfassen mehrerer Teile ausgebildet und weist dazu mehrere in Längserstreckungsrichtung der zu haltenden Teile etwa fluchtend angeordnete Greifer 3 auf, die Mehrfach-Greiferfinger 4,4a haben. Diese weisen jeweils quer zur Längserstreckung der zu haltenden Teile mehrere, im Ausführungsbeispiel zwölf durch Greiferfinger 5,6 begrenzte Aufnahmefächer 12 auf. Die Greiferfinger 5 beziehungsweise 6 aller Greifer jeweils der gleichen Beaufschlagungsseite bilden spiegelbildliche Greifer-Gruppen 5a beziehungsweise 6a. Die Greiferfinger 5 einerseits und die Greiferfinger 6 andererseits sind miteinander verbunden oder gekoppelt und sind jeweils an einen Antrieb für eine gemeinsame Öffnungs- und Schließbewegung angeschlossen.
Zum Halten eines Teiles 2 wird dieses an mehreren Stellen seiner Längserstreckung beidseitig gegenüberliegend an Beaufschlagungsseiten durch parallel stehenden Kontaktflächen der Greiferfinger 5 und 6 beaufschlagt.
Diese Kontaktflächen fahren beim Schließen der Greifvorrichtung synchron zusammen und schließen die dazwischen liegenden Teile kraftschlüssig ein. Alle Teile werden dadurch gleichzeitig gegriffen und gespannt.
Die auf der einen Seite des jeweiligen Teiles 2 angreifenden Greiferfinger 5 bilden eine erste Greifer-Gruppe 5a und die jeweils an gleichen Stellen der Längserstreckung der Teile an der anderen Beaufschlagungsseite angreifenden Greiferfinger 6 eine zweite Greifer-Gruppe 6a (vergleiche auch Fig. 3). Durch die Verbindungen der Greiferfinger 5 bzw.6 jeweils einer Gruppe 5a bzw.6a ist sichergestellt, dass alle Greiferfinger bei der Öffnungs- und Schließbewegung synchrone Bewegungen ausführen.
Als Antrieb 7 der Greifer 3 für die gemeinsame Öffnungs- und Schließbewegung sind im Ausführungsbeispiel nach Fig. 1 bis 3 zwei handelsübliche Parallelgreifer 8 vorgesehen, die jeweils mit einer Greiferbacke 9 an der ersten Gruppe 5a von Greiferfingern 5 und mit der anderen Greiferbacke 10 an der zweiten Gruppe 6a von Greiferfingern 6 angreifen. Die Öffnungs- und Schließbewegung der Greiferbacken 9 und 10 und damit auch der angeschlossenen Greifer 3 erfolgt gemäß dem Doppelpfeil Pf 1 in Fig. 1.
Die einzelnen Greifer 3 weisen zur Bildung der Mehrfach-Greiferfinger 4 jeweils quer zur Längserstreckung der zu haltenden Teile 2 verlaufende Bügel 11 und daran auf der Greiferseite vorstehende, zueinander beabstandete, segmentartig aufgebaute Greiferfinger 5 bzw.6 auf. Zwei Mehrfach-Greiferfinger 4 und 4a bilden jeweils einen Greifer 3 und sind mit ihren Bügeln 11 parallel nebeneinander angeordnet. Abwechselnd direkt nebeneinander liegende Greiferfinger 5, 6 der beiden Mehrfach-Greiferfinger 4, 4a bilden jeweils eine Begrenzungswand benachbarter Aufnahmefächer 12.
Die Ausbildung und Anordnung der Mehrfach-Greiferfinger 4 ist gut auch in der Stirnseitenansicht der Greifvorrichtung 1 gemäß Fig. 3 erkennbar. Der eine (in der Fig. 3 hintere) Mehrfach-Greiferfinger 4 weist eine Reihe von zu einer ersten Gruppe 5a gehörende Greiferfinger 5 auf, während der andere (in der Fig. 3 vordere) Mehrfach-Greiferfinger 4a zu einer zweiten Gruppe 6a gehörende Greiferfinger 6 aufweist. Die Greiferfinger 5 und 6 sind mit ihren einander zugewandten Rückseiten nahe beieinander angeordnet und können in Greifer-Offenstellung mit ihren Rückseiten etwa aneinander liegen. Die jeweils gegenüberliegenden Seiten bilden Greifseiten 13, wobei benachbarte Greifseiten der Greiferfinger 5 und 6 jeweils ein Aufnahmefach 12 begrenzen. In den Figuren sind die Greifer in Schließlage mit mehreren eingespannten Teilen 2 dargestellt. In dieser Spannlage haben die Rückseiten benachbarter Greiferfinger 5 und 6 einen der Schließbewegung entsprechenden, kleinen Abstand. An den freien Enden der Greiferfinger 5 und 6 sind dem jeweiligen Aufnahmefach 12 zugewandt, Abschrägungen 14 zur Bildung einer konischen Aufnahmeöffnung der Aufnahmefächer 12 vorgesehen. In Öffnungsstellung der Greifer 3, wo ihre Greiferfinger 5 und 6 vorzugsweise mit ihren Rückseiten aneinander liegen, bilden die freien Greiferfinger-Enden mit den Abschränkungen 14 Keile, die bei dicht nebeneinander liegenden, aufzunehmenden Teilen 2 gut in die Zwischenräume zwischen den Teilen eindringen können. Damit ist eine sichere Aufnahme der Teile begünstigt.

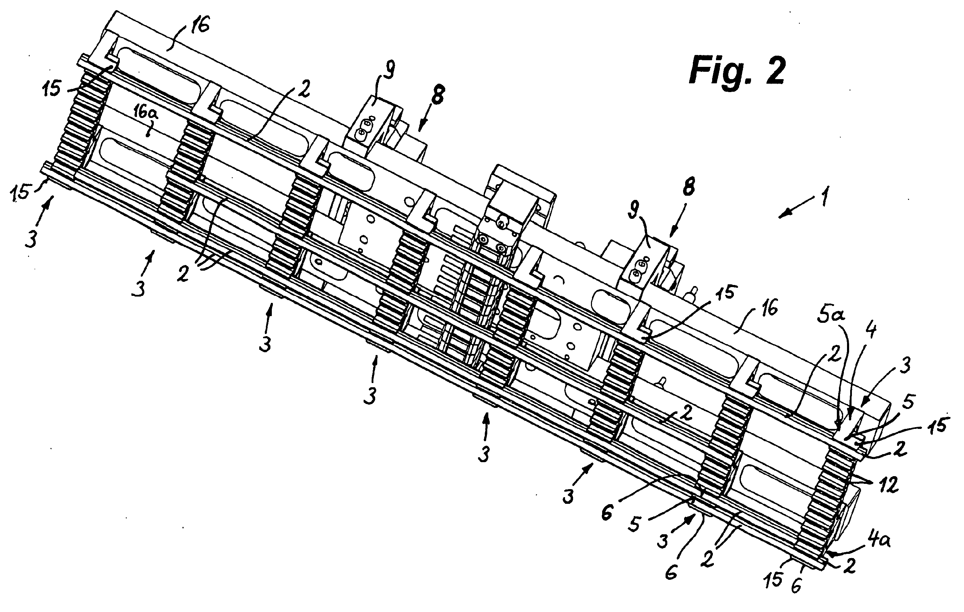

In der Unterseitenansicht gemäß Fig. 2 ist besonders gut erkennbar, dass die einzelnen Greiferfinger 5 und 6 benachbarter Mehrfach-Greiferfinger 4, 4a seitliche, in den Bereich des jeweils anderen Mehrfach-Greiferfingers eingreifende Fortsätze 15 aufweisen, so dass jeweils in einem Greifbereich etwa deckungsgleich gegenüberliegend eine Beaufschlagung des zu haltenden Teiles 2 erfolgt.

In den Ausführungsbeispielen sind in Längsrichtung der zu haltenden Teile 2 acht Greifer 3 angeordnet. Die Anzahl der vorgesehenen Greifer 3 und damit auch deren Abstand in Längsrichtung der Teile 2 richtet sich einerseits nach der Länge der Teile 2 und auch nach deren Eigenschaften. So ist der Abstand benachbarter Greifer 3 bei extrem biegeschlaffen Teilen für eine gestreckte Halterung des Teiles geringer vorgesehen als für Teile, die noch eine Restbiegestabilität aufweisen. Andererseits ist eine Ausbildung der Greifvorrichtung mit Anpassung an Teile mit einer größten Länge auch geeignet für Teile, die eine geringere Länge aufweisen oder die vor dem Ergreifen eine andere Lage relativ zu den anderen Teilen aufweisen.
In Fig. 2 ist gut erkennbar, dass zwei etwa gleichlange Teile in gleicher Lage in den Außenbereichen der Greifvorrichtung gehalten sind, während neben einem dieser Teile ein etwas kürzeres Teil 2 und etwa in der Mitte der Greifvorrichtung ein weiteres, noch kürzeres Teil 2 gehalten ist. Die Greifvorrichtung kann somit universell für Teile eingesetzt werden, die beispielsweise nur von zwei Greifern an beliebiger Stelle der Längserstreckung der Greifvorrichtung erfasst werden können oder auch für Teile die der Länge der Greifvorrichtung entsprechen oder etwas länger sind.

Wie gut in den Fig. 1 und 2 erkennbar, sind von den Greifern 3 die jeweils für eine Beaufschlagungsseite vorgesehenen Mehrfach-Greiferfinger 4 beziehungsweise 4a über Längsträger 16, 16a miteinander verbunden. An diesen Längsträgern greifen die im Ausführungsbeispiel vorgesehenen zwei Parallelgreifer 8 mit ihren Greiferbacken 9 und 10 an. Bei der Öffnungs- und Schließbewegung der Greiferbacken 9 und 10 werden demnach auch die Längsträger 16, 16a entsprechend bewegt.
Die beiden Parallelgreifer 8 sind mit ihren Trägerteilen an ein hier nicht dargestelltes Handhabungssystem angeschlossen.

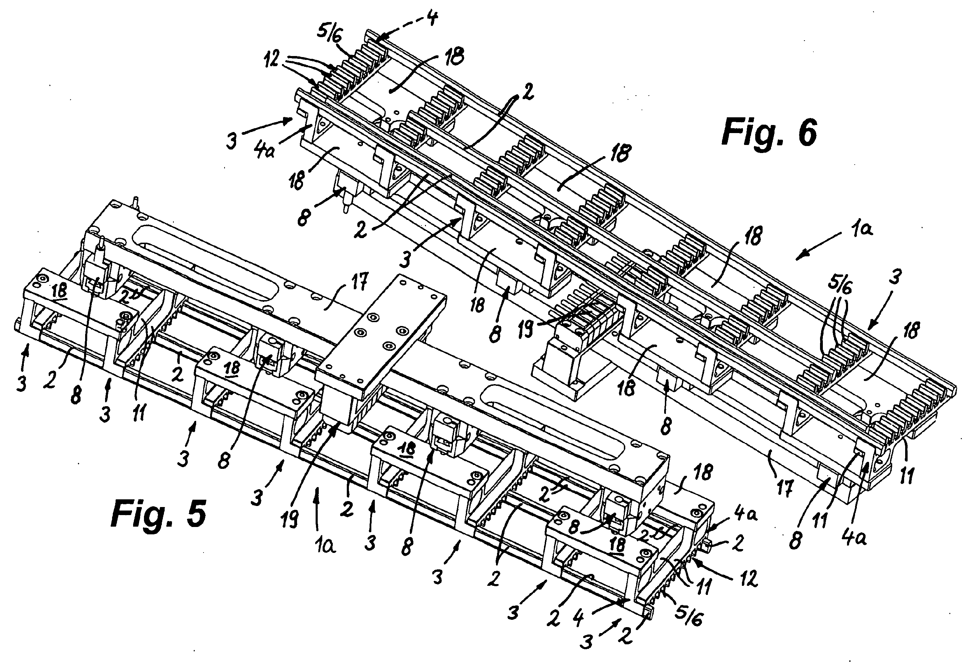

Die Fig. 4 bis 6 zeigen eine konstruktiv abgewandelte Ausführungsform einer Greifvorrichtung 1a, bei der anstatt von die einzelnen Mehrfach-Greiferfinger 4, 4a verbindenden Längsträgern jeweils nur zwei in Längsrichtung benachbarte Greifer 3 verbunden und jeweils an einen Parallelgreifer 8 angeschlossen sind. In diesem Ausführungsbeispiel sind die hier vorgesehenen vier Parallelgreifer 8 an einer Greifergrundplatte 17 befestigt, die ihrerseits mit dem nicht dargestellten Handhabungssystem verbunden ist. Die Greifbacken 9 und 10 der jeweiligen Parallelgreifer 8 sind an Verbindungsplatten 18 angeschlossen, über die jeweils Mehrfach-Greiferfinger 4 beziehungsweise 4a von jeweils benachbarten Greifern 3 verbunden sind.

Für beide Ausführungsformen von Greifvorrichtungen 1, 1a sind Sensoren 19 zur Belegungsüberwachung der einzelnen Aufnahmefächer 12 für die zu greifenden Teile 2 vorgesehen. Entsprechend der Anzahl der in Querrichtung angeordneten Anzahl von Aufnahmefächern 12 sind Sensoren 19 vorgesehen. Wie gut in den Figuren erkennbar, sind die in einer Querreihe angeordneten Sensoren 19 etwa mittig der Längserstreckung der Greifvorrichtung 1, 1a angeordnet, weil in diesem Bereich die größte Erfassungssicherheit auch bei unterschiedlich langen Teilen gegeben ist. Bedarfsweise besteht aber auch die Möglichkeit, die Sensoren an anderer Stelle oder mehrere Sensorreihen an unterschiedlichen Stellen der Längserstreckung der Greifvorrichtung anzuordnen. Damit würde auch die Möglichkeit bestehen, nicht nur die Anwesenheit der Teile zu detektieren, sondern auch deren Lage.

## Patentansprüche

1. Handhabungseinrichtung zum Handhaben insbesondere biegeschlaffer, länglicher Teile (2), mit einer Greifvorrichtung (1,1a) die einen Greifer (3) mit Greiferfingern (5,6) zum Erfassen und Halten eines Teiles aufweist und mit einem Antrieb (7) für eine Öffnungs- und Schließbewegung des Greifers, die Greifvorrichtung (1,1a) zum gleichzeitigen Erfassen mehrerer Teile (2) ausgebildet ist und dazu wenigstens zwei in Längserstreckungsrichtung der zu haltenden Teile etwa fluchtend angeordnete Greifer (3) aufweist, **dadurch gekennzeichnet, dass** die Greifer (3) Mehrfach-Greiferfinger (4,4a) haben, die jeweils quer zur Längserstreckung der zu haltenden Teile (2) wenigstens zwei durch Greiferfinger (5,6) begrenzte Aufnahmefächer (12) aufweisen und dass die Greiferfinger (5,6) aller Greifer (3) jeweils der gleichen Beaufschlagungsseite eine Greifer-Gruppe (5a,6a) bilden, deren Greiferfinger (5,6) miteinander verbunden sowie jeweils an den Antrieb (7) angeschlossen sind für eine gemeinsame Öffnungs- und Schließbewegung.

2. Greifvorrichtung nach Anspruch 1, **dadurch gekennzeichnet, dass** die Mehrfach-Greiferfinger (4,4a) aufweisenden Greifer (3) jeweils quer zur Längserstreckung der zu haltenden Teile (2) verlaufende Bügel (11) und daran auf einer Seite vorstehende, zueinander beabstandete Greiferfinger (5,6) haben und dass zwei einen Greifer (3) bildende Mehrfach-Greiferfinger (4,4a) mit ihren Bügeln (11) parallel nebeneinander angeordnet sind und abwechselnd direkt nebeneinander liegende Greiferfinger (5,6) der beiden Mehrfach-Greiferfinger(4,4a) jeweils eine Begrenzungswand benachbarter Aufnahmefächer (12) bilden.

3. Greifvorrichtung nach Anspruch 1 oder 2, **dadurch gekennzeichnet, dass** die einzelnen Greiferfinger (5,6) benachbarter Mehrfach-Greiferfinger (4,4a) seitliche, in den Bereich des jeweils anderen Mehrfach-Greiferfingers eingreifende Fortsätze (15) aufweisen und dass benachbarte, zu unterschiedlichen Mehrfach-Greiferfingern(4,4a) gehörende Einzel-Greiferfinger (5,6) in Greifer-Offenstellung mit ihren den Greifseiten (13) abgewandten Rückseiten etwa aneinander liegen.

4. Greifvorrichtung nach Anspruch 3, **dadurch gekennzeichnet, dass** an den freien Enden der Greiferfinger (5,6), dem jeweiligen Aufnahmefach (12) zugewandt, Abschrägungen (14) zur Bildung einer konischen Aufnahmeöffnung der Aufnahmefächer (12) vorgesehen sind.

5. Greifvorrichtung nach einem der Ansprüche 1 bis 4, **dadurch gekennzeichnet, dass** mehr als zwei Greifer (3) in Längsrichtung der Greifvorrichtung vorgesehen sind, insbesondere eine auf die Länge und/oder Eigenschaften der zu greifenden Teile abgestimmmte Anzahl von in Längsrichtung hintereinander angeordneten Greifern (3).

6. Greifvorrichtung nach einem der Ansprüche 1 bis 5, **dadurch gekennzeichnet, dass** als Antrieb für die Greifer (3) ein oder mehrere Parallelgreifer (8) vorgesehen sind, die jeweils mit einer Greiferbacke (9) an der ersten Gruppe (5a) von Greiferfingern (5) und mit der anderen Greiferbacke (10) an der zweiten Gruppe (6a) von Greiferfingern (6) angreifen.

7. Greifvorrichtung nach einem der Ansprüche 1 bis 6, **dadurch gekennzeichnet, dass** Sensoren (19) zur Belegungsüberwachung der einzelnen Aufnahmefächer (12) für die zu greifenden Teile (2) vorgesehen sind und dass die Sensoren (19) vorzugsweise etwa in einem zentralen Bereich der Längserstreckung der Greifvorrichtung (1,1a) angeordnet sind.

8. Greifvorrichtung nach einem der Ansprüche 1 bis 7, **dadurch gekennzeichnet, dass** jeweils ein Teil der jeweiligen Gruppe (5a,6a) von Greiferfingern (5,6) für jeweils eine der beiden Beaufschlagungsseiten miteinander verbunden und für eine Öffnungs- und Schließbewegung jeweils an eine Greiferbacke (9,10) eines Parallelgreifers (8) angeschlossen sind.

9. Greifvorrichtung nach einem der Ansprüche 1 bis 8, **dadurch gekennzeichnet, dass** jeweils eine Gruppe (5a,6a) von Greiferfingern (5,6) für eine der beiden Beaufschlagungsseiten miteinander verbunden und für eine Öffnungs- und Schließbewegung jeweils an eine Greiferbacke (9,10) eines oder mehrerer Parallelgreifer (8) angeschlossen sind.

10. Greifvorrichtung nach einem der Ansprüche 8 oder 9, **dadurch gekennzeichnet, dass** bei Einsatz mehrerer Parallelgreifer (8) eine etwa der Länge der Greifvorrichtung (1,1a) entsprechende Greifergrundplatte (17) als Trägerteil für die Parallelgreifer (8) vorgesehen ist, an der die Parallelgreifer (8) vorzugsweise über die Länge verteilt mit gleichem Abstand angeordnet sind.

11. Greifvorrichtung nach einem der Ansprüche 1 bis 10, **dadurch gekennzeichnet, dass** die Greifvorrichtung (1,1a) zum Handhaben von Kabelstücken, Gummileisten und der-gleichen biegeschlaffer, länglicher Teile ausgebildet ist.

## Claims

1. Handling device for handling, in particular, flexible elongate parts (2), having a gripping device (1, 1a) which comprises a gripper (3) with gripper fingers (5, 6) for gripping and holding a part and having a drive (7) for causing the gripper to open and close, the gripping device (1, 1a) being designed to grip a plurality of parts (2) simultaneously and comprising for this purpose at least two grippers (3) arranged substantially in alignment in the longitudinal direction of the parts which are to be held, **characterised in that** the grippers (3) have multiple gripper fingers (4, 4a) which comprise, transversely of the longitudinal direction of the parts (2) which are to be held, at least two receiving compartments (12) bounded by gripper fingers (5, 6), and **in that** the gripper fingers (5, 6) of all the grippers (3) on the same engagement side form a gripper set (5a, 6a), the gripper fingers (5, 6) of which are joined together and connected to the drive (7) for a common opening and closing movement.

2. Gripping device according to claim 1, **characterised in that** the grippers (3) comprising multiple gripper fingers (4, 4a) have brackets (11) extending transversely of the longitudinal direction of the parts (2) which are to be held and gripper fingers (5, 6) projecting on one side and spaced from one another, and **in that** two multiple gripper fingers (4, 4a) forming a gripper (3) are arranged with their brackets (11) side by side and parallel, and alternately directly adjacent gripper fingers (5, 6) of the two multiple gripper fingers (4, 4a) in each case form a boundary wall between adjacent receiving compartments (12).

3. Gripping device according to claim 1 or 2, **characterised in that** the individual gripper fingers (5, 6) of adjacent multiple gripper fingers (4, 4a) have lateral projections (15) engaging in the region of the other multiple gripper finger in each case and **in that** adjacent individual gripper fingers (5, 6) belonging to different multiple gripper fingers (4, 4a) in the open position of the grippers abut substantially on one another at their rear sides which are remote from the gripping sides (13).

4. Gripping device according to claim 3, **characterised in that** on the free ends of the gripper fingers (5, 6), facing the respective receiving compartment (12), chamfers (14) are provided for forming a conical receiving aperture in the receiving compartments (12).

5. Gripping device according to one of claims 1 to 4, **characterised in that** more than two grippers (3), particularly a number of grippers (3) arranged one behind the other in the longitudinal direction, matched to the length and/or characteristics of the parts which are to be gripped, are provided in the longitudinal direction of the gripping device.

6. Gripping device according to one of claims 1 to 5, **characterised in that** one or more parallel grippers (8) are provided as the drive for the grippers (3), which act with one gripper jaw (9) on the first set (5a) of gripper fingers (5) and with the other gripper jaw (10) on the second set (6a) of gripper fingers (6).

7. Gripping device according to one of claims 1 to 6, **characterised in that** sensors (19) are provided for monitoring the occupancy of the individual receiving compartments (12) for the parts (2) which are to be gripped and **in that** the sensors (19) are preferably arranged substantially in a central region of the longitudinal extent of the gripping device (1, 1a).

8. Gripping device according to one of claims 1 to 7, **characterised in that** some of the particular set (5a, 6a) of gripper fingers (5, 6) for one of the two engagement sides; are joined together and are connected to a gripper jaw (9, 10) of a parallel gripper (8) for an opening and closing movement.

9. Gripping device according to one of claims 1 to 8, **characterised in that** a set (5a, 6a) of gripper fingers (5, 6) for one of the two engagement sides are joined together and are connected to a gripper jaw (9, 10) of one or more parallel grippers (8) for an opening and closing movement.

10. Gripping device according to one of claims 8 or 9, **characterised in that** when a plurality of parallel grippers (8) are used a gripper base plate (17) corresponding substantially to the length of the gripping device (1, 1a) is provided as the support member for the parallel grippers (8), on which the parallel grippers (8) are disposed, preferably evenly spaced over its length.

11. Gripping device according to one of claims 1 to 10, **characterised in that** the gripping device (1, 1a) is designed for handling lengths of cable, rubber strips and similar flexible elongate parts.

## Revendications

1. Système de manutention destiné en particulier à la manutention d'éléments allongés à cintrage souple (2), du type comportant un dispositif de préhension (1, 1a) qui présente un système de prise, du type connu sous le nom de « greifer » (3) équipé de doigts de préhension (5, 6) pour la prise et le maintien d'un élément, et un entraînement pour le mouvement d'ouverture et de fermeture du greifer du dispositif de préhension (1, 1a), en vue de la prise simultanée de plusieurs éléments (2), et qui présente en outre au moins deux greifers (3), disposés à peu près au niveau des éléments à maintenir dans la direction de leur orientation longitudinale, **caractérisé en ce que** le greifer (3) comporte des doigts de préhension multiples (4, 4a) qui présentent chacun au moins deux surfaces de prise délimitées par les doigts de préhension (5, 6), et transversales à l'orientation longitudinale des éléments à maintenir,et **en ce que** les doigts de préhension (5, 6) de tous les greifers (3) forment chacun un côté de contact d'un groupe de greifers (5a 6a), dont les doigts de préhension (5, 6) sont reliés entre eux, tandis que chacun est réuni à l'entraînement (7), en vue d'un déplacement d'ensemble d'ouverture et de fermeture.

2. Dispositif de préhension selon la revendication 1, **caractérisé en ce que** chacun des greifers (3) présentant des doigts de préhension multiples (4, 4a) comporte des doigts de préhension (5, 6) espacés les uns des autres, transversaux à l'orientation longitudinale de l'étrier (11) prévu pour retenir les éléments (2) et dépassant de ceux-ci sur un côté, et **en ce que** deux doigts de préhension (4, 4a) formant un greifer (3) sont disposés avec leurs étriers (11) parallèles l'un à l'autre, et les doigts (5, 6) situés alternativement immédiatement l'un à côté de l'autre de deux doigts de préhension multiples (4, 4a) forment chacun l'une des parois voisines délimitant un éventail récepteur (12).

3. Dispositif de préhension selon l'une ou l'autre des revendications 1 ou 2, **caractérisé en ce que** les doigts de préhension individuels (5, 6) de doigts de préhension multiples (4, 4a) présentent latéralement, dans la région de chacun des autres doigts de préhension multiple des appendices de prise (15), et **en ce que** des doigts de préhension individuels (5, 6) appartenant à des doigts de préhension multiple (4, 4a) voisins et différents, quand ils sont en position ouverte du greifer se situent avec leurs côtés arrière opposés aux côtés de préhension (13) l'un contre l'autre.

4. Dispositif de préhension selon la revendication 3, **caractérisé en ce que**, aux extrémités libres des doigts de préhension (5, 6) opposées à chaque éventail récepteur, sont prévus des biseautages (14) en vue de former une ouverture de réception cônique pour l'éventail récepteur (12).

5. Dispositif de préhension selon l'une quelconque des revendications 1 à 4, **caractérisé en ce que** plus de deux greifers (3) sont prévus dans l'orientation longitudinale du dispositif de préhension, en particulier, un nombre, déterminé en fonction de la longueur et/ou d'autres propriétés des éléments à saisir, de greifers (3), disposés les uns derrière les autres dans le sens de la longueur.

6. Dispositif de préhension selon l'une quelconque des revendications 1 à 5, **caractérisé en ce que**, comme entraînement pour les greifers (3), sont prévus un ou plusieurs greifers parallèles (8), qui, chacun, s'accroche à la joue (9) d'un greifer du premier groupe (5a) de doigts de préhension et à l'autre joue (10) d'un greifer du second groupe (6a) de doigts de préhension.

7. Dispositif de préhension selon l'une quelconque des revendications 1 à 6, **caractérisé en ce que** des palpeurs (19) pour la surveillance de l'organisation des éventails récepteurs individuels (12) sont prévus pour les éléments à saisir, et **en ce que** les palpeurs (19) sont disposés de préférence dans une région à peu près centrale de la longueur du dispositif de préhension (1, 1a).

8. Dispositif de préhension selon l'une quelconque des revendications 1 à 7, **caractérisé en ce que** chacune des parties de chacun des groupes (5a, 6a) de doigts de préhension (5, 6) est relié avec les autres pour chacun des deux côtés de contact et est rattaché à une joue de préhension (9, 10) d'un greifer parallèle (8).

9. Dispositif de préhension selon l'une quelconque des revendications 1 à 8, **caractérisé en ce que** chacun des groupes (5a, 6a) de doigts de préhension (5, 6) est relié avec les autres pour un des deux côtés de contact et, pour un mouvement d'ouverture et de fermeture, rattaché à chacune des joues de préhension (9, 10) d'un ou plusieurs greifers parallèles (8).

10. Dispositif de préhension selon l'une ou l'autre des revendications 8 ou 9, **caractérisé en ce que**, lors de la mise en oeuvre de plusieurs greifers parallèles (8), une plaque de base de préhension (17), correspondant à peu près à la longueur du dispositif de préhension (1, 1a), est prévue comme moyen de support pour les greifers parallèles (8), et à laquelle les greifers parallèles (8) sont adaptés, de préférence répartis sur toute sa longueur à des distances égales.

11. Dispositif de préhension selon l'une quelconque des revendications 1 à 10, **caractérisé en ce que** le dispositif de préhension (1, 1a) est agencé en vue de la manipulation de tronçons de câbles, de formes de caoutchouc et autres éléments allongés semblables à cintrage souple.
